# EUROPEAN PATENT SPECIFICATION

(11) **EP 2 876 741 B1**
(45) Date of publication and mention of the grant of the patent: **13.09.2017**
(21) Application number: 14192112.2
(22) Date of filing: 06.11.2014
(51) Int. Cl.: H01R 13/447, H01R 13/60, H01R 13/639

(54) **OBD connector protective cover**
Schutzabdeckung für einen OBD-Stecker
Couvercle de protection de connecteur OBD

(30) Priority: 25.11.2013 JP 2013242748
(43) Date of publication of application: 27.05.2015
(73) Proprietor: Ashikawa Co., Ltd., Tokyo 113-0021 (JP)
(72) Inventor: Ashikawa, Tatsuya, Tokyo, 113-0021 (JP)
(74) Representative: Gulde & Partner

(56) References cited:
- GB-A- 2 483 868
- JP-B- 5 083 924
- US-A- 5 277 599
- US-A- 6 159 025

## Description

### BACKGROUND OF THE INVENTION

### Field of the Invention

The present invention relates to an OBD connector protective cover for protecting an OBD connector provided for a vehicle, and more specifically to the OBD connector with an enhanced abuse prevention effect. Devices for protecting and/or holding connectors are disclosed in US 2,277,599, GB 2483868 and US 6,159,025.

Vehicles with a self-fault diagnostic function using a computer are provided with an OBD (On-board diagnostics) connector connected to the computer as means for acquiring a diagnosis result using the function. An OBD connector protective cover described in Japanese Patent Publication No. 5083924 is well-known as means for preventing illegal access to this type of OBD connector.

The OBD connector protective cover of JP 5083924 can accommodate the entire OBD connector in a body (102) from an opening (103), and closes the opening (103) with a key cylinder (120) and a slide cover (110) so as to prevent illegal access (abuse) to the OBD connector.

However, since the above-described OBD connector protective cover according to JP 5083924 is configured such that the key cylinder (120) is placed on a side thereof (see Figure 1 and Figure 2 of JP 5083924), the key cylinder (120) does not have much of a presence and the presence of the key cylinder (120) cannot be said to have a great effect of preventing the abuse of the OBD connector such as threatening an abuser of the OBD connector.

In addition, when the width dimension and depth dimension of the OBD connector are compared with those of an existing OBD connector, the width dimension is apparently longer (see width L2 and depth L3 of the OBD connector 100 shown in Figure 6(a) of the present application). In this respect, since the OBD connector protective cover of JP 5083924 is structured such that the OBD connector is accommodated by causing the OBD connector to extend along the width direction of the body (102), the width dimension of the body (102) needs to be increased in accordance with the width dimension of the OBD connector, which prevents installation of the OBD connector protective cover in a narrow space, resulting in a problem of limiting the type of vehicle in which the OBD connector protective cover can be installed.

The symbols in parentheses above are reference numerals used in Japanese Patent Publication No. 5083924.

### SUMMARY OF THE INVENTION

The present invention has been implemented to solve the above-described problems and it is an object of the present invention to provide an OBD connector with an enhanced abuse prevention effect and further provide a compact OBD connector protective cover also applicable to an OBD connector installed in a narrow space.

In order to attain the above object, the present invention provides an OBD connector protective cover to protect an OBD connector provided for a vehicle, according to claim 1. The OBD connector protective cover according to the invention includes a body case that has an opening and can accommodate the entire OBD connector from the opening, a slide cover that is slidably attached to the body case and opens/closes the opening by sliding thereof, and a lock mechanism that includes a key cylinder placed on a forefront of the slide cover in a visually observable manner and locks the slide cover through operation of the key cylinder. The lock mechanism further comprises:
a key plate that engages with a plate insertion hole of the slide cover and a plate engagement groove in the body case to thereby set the slide cover in a non-slidable state; and a lock pin that is inserted into a lock hole of the key plate from the key cylinder through operation of the key cylinder to thereby lock the slide cover set in the non-slidable state.

In the present invention, the body case may be structured to accommodate the OBD connector along a direction orthogonal to the width direction.

Moreover, in the present invention, the slide cover may include lugs that are functionally equivalent to lugs provided on both sides of an existing OBD connector or a joint that is functionally equivalent to a joint provided for the existing OBD connector.

As a specific configuration of the OBD connector protective cover, the present invention is configured to place a key cylinder on a forefront of the slide cover in a visually observable manner so that anybody can recognize the presence of the key cylinder at a glance, having strong appeal of the presence of the key cylinder to the abuser of the OBD connector in particular, consequently causing the abuser to give up the intention of abusing the OBD connector, and can thereby provide an OBD connector protective cover with an enhanced abuse prevention effect.

As described above, the present invention provides the key cylinder on the forefront of the slide cover, and thereby has an advantage that the key cylinder can be easily operated when access to the OBD connector is necessary on occasions of automobile inspection or vehicle overhaul or the like.

Moreover, as a specific configuration of the body case in the OBD connector protective cover, the present invention adopts a configuration of the body case such that the entire OBD connector is accommodated along a direction orthogonal to a width direction thereof (longitudinal accommodation). For this reason, it is possible to reduce the width dimension of the body case in accordance with the depth dimension of the OBD connector which is by far shorter than the width dimension of the OBD connector, downsize the entire OBD connector protective cover in the width direction, provide a compact OBD connector protective cover applicable to an OBD connector installed in a narrow space, and obtain advantageous operations and effects such as increasing the number of types of vehicles in which the OBD connector protective cover can be installed. Since the entire OBD connector is accommodated in a longitudinal position as described above, it is more difficult to visually observe the back side of the OBD connector and more difficult to identify the harness (bundle of electric wires) on the back side of the connector. Thus, there is also an effect of making it difficult to make illegal access from the back side of the OBD connector such as connecting an illegal device to the harness on the back side of the OBD connector to illegally access a vehicle-mounted computer.

### BRIEF DESCRIPTION OF THE DRAWINGS

Figure 1 is an exploded perspective view of an OBD connector protective cover to which the present invention is applied.
Figure 2(a) is a perspective view of a body case constituting the OBD connector protective cover in Figure 1, Figure 2(b) is a front view of the body case, Figure 2(c) is a top view thereof, Figures 2(d1) and (d2) are side views, Figures 2(e) is a rear view and Figure 2(f) is a bottom view.
Figure 3(a) is a perspective view of a slide cover constituting the OBD connector protective cover in Figure 1, Figure 3(b) is a front view of the slide cover, Figure 3(c) is a top view thereof, Figure 3(d) is a side view, Figure 3(e) is a rear view and Figure 3(f) is a bottom view.
Figure 4 is a perspective view of a key cylinder constituting the OBD connector protective cover in Figure 1.
Figure 5 is a perspective view of a key plate constituting the OBD connector protective cover in Figure 1.
Figures 6(a) and (b) are diagrams illustrating a method of using the OBD connector protective cover in Figure 1.
Figures 7(a) and (b) are diagrams illustrating a method of using the OBD connector protective cover in Figure 1.

### DETAILED DESCRIPTION OF THE PREFERRED EMBODIMENTS

Hereinafter, a best mode for carrying out the present invention will be described in detail with reference to the accompanying drawings.

### << Overview of OBD connector protective cover >>

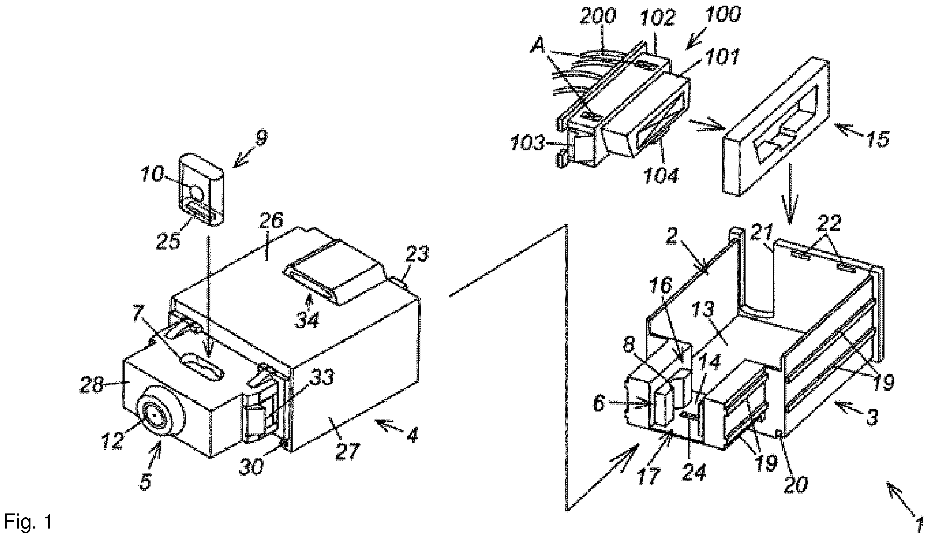

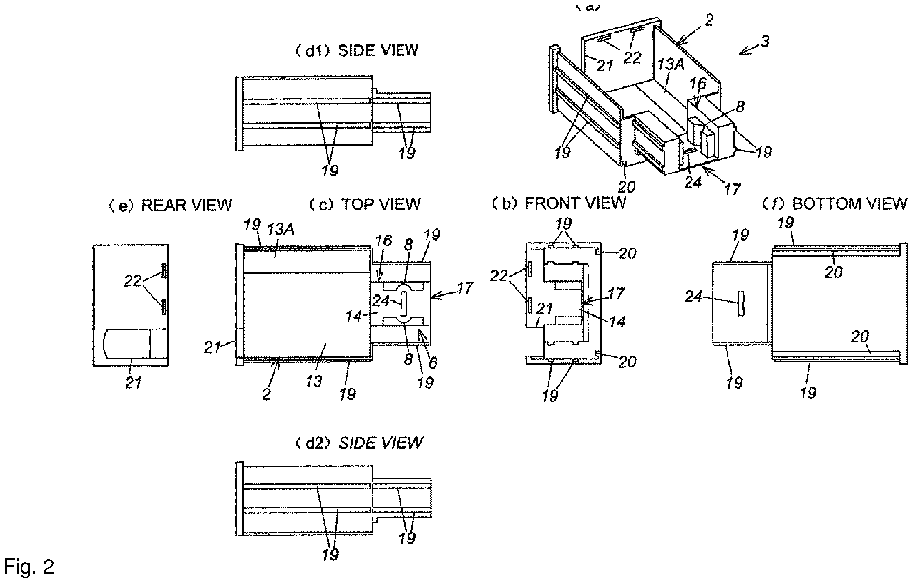

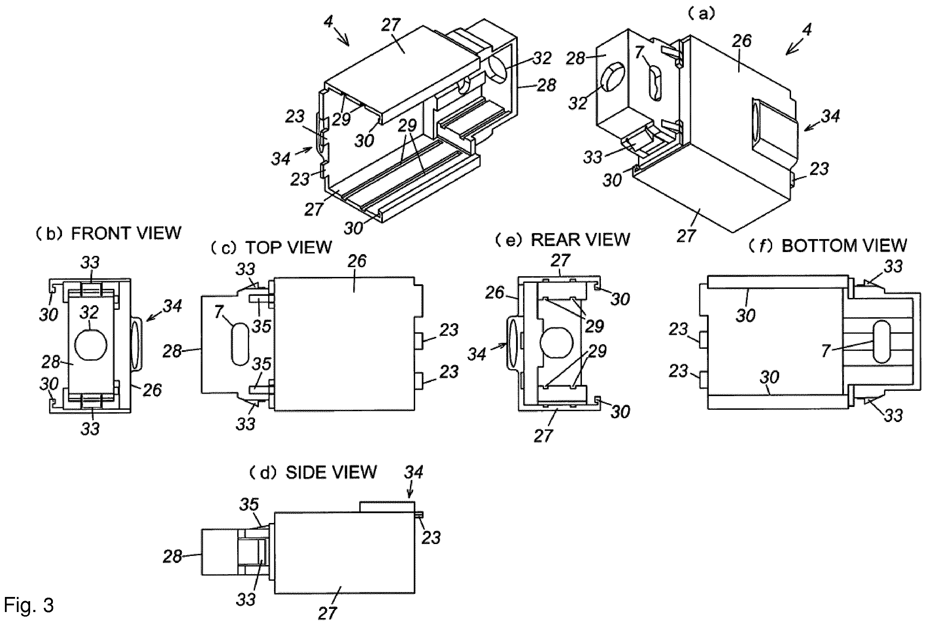

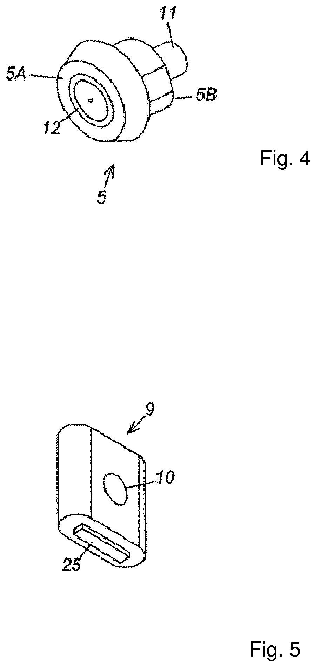

Figure 1 is an exploded perspective view of an OBD connector protective cover to which the present invention is applied, Figure 2(a) is a perspective view of a body case constituting the OBD connector protective cover in Figure 1, Figure 2(b) is a front view of the body case, Figure 2(c) is a top view thereof, Figures 2(d1) and (d2) are side views, Figures 2(e) is a rear view and Figure 2(f) is a bottom view. Figure 3(a) is a perspective view of a slide cover constituting the OBD connector protective cover in Figure 1, Figure 3(b) is a front view of the slide cover, Figure 3(c) is a top view thereof, Figure 3(d) is a side view, Figure 3(e) is a rear view and Figure 3(f) is a bottom view, Figure 4 is a perspective view of a key cylinder constituting the OBD connector protective cover in Figure 1 and Figure 5 is a perspective view of a key plate constituting the OBD connector protective cover in Figure 1.

The OBD connector protective cover 1 in Figure 1 is an OBD connector protective cover that protects an OBD connector 100 provided for a vehicle and has a specific configuration including an opening 2, a body case 3 in Figure 2(a) that can accommodate the entire OBD connector 100 through the opening 2, a slide cover 4 in Figure 3(a) that is slidably attached to the body case 3 and opens/closes the opening 2 by sliding thereof, a key cylinder 5 in Figure 4 provided on a forefront of the slide cover 4 in a visually observable manner and a lock mechanism 6 that locks the slide cover 4 by an operation of the key cylinder 5.

More specifically, the lock mechanism 6 has a structure provided with (A) the key cylinder 5, (B) a key plate 9 in Figure 5 that engages with a plate insertion hole 7 of the slide cover 4 and a plate engagement groove 8 in the body case 3 to set the slide cover 4 in a non-slidable state, and (C) a lock pin 11 in Figure 4 that is inserted into a lock hole 10 of the key plate 9 from the key cylinder 5 by an operation of the key cylinder 5 to lock the slide cover 4.

Referring to Figure 4, the key cylinder 5 is formed with a key hole 12 to insert a key from a front surface 5A and the lock pin 11 that can come out of or go into a rear surface 5B. The lock pin 11 is configured to come out of or go into the rear surface 5B by inserting the key into the key hole 12 and operating it as shown in Figure 4.

### << Detailed configuration of body case 3 >>

Referring to Figure 1 and Figures 2(a) and (c), the body case 3 includes a connector chamber 13 that accommodates the entire OBD connector 100 and a lock chamber 14 that locks the slide cover 4.

The connector chamber 13 has a shape whose top surface is open to function as the opening 2 to accommodate the entire OBD connector 100 and is provided behind the lock chamber 14. When the OBD connector 100 is accommodated in this connector chamber, the OBD connector 100 may be accommodated using a connector accommodation adapter frame 15 in Figure 1 or the OBD connector 100 may be accommodated directly in the connector chamber 13 without using the connector accommodation adapter frame 15.

A connection terminal portion 101 of an existing OBD connector 100 has a standardized outside shape and dimension, but parts other than the connection terminal portion 101 of the existing OBD connector 100 such as a fitting 102 of the OBD connector 100 to attach the OBD connector 100 to the vehicle have varying outside shapes and dimensions depending on the type of vehicle or the like.

For this reason, when the existing OBD connector 100 is accommodated directly in the connector chamber 13 as is, an excessively large gap may be produced between the accommodated OBD connector 100 and the connector chamber 13, which may produce backlash of the OBD connector 100 due to vibration of the vehicle or the like, causing the OBD connector 100 to be accommodated unstably.

Use of the connector accommodation adapter frame 15 is effective as means for avoiding the above-described problem (unstable accommodation of the OBD connector 100). The connector accommodation adapter frame 15 is formed as a frame in size and shape so as to close fit into the connector chamber 13, and has a structure in which the connection terminal portion 101 of the OBD connector 100 can be fitted in the frame. For this reason, use of the connector accommodation adapter frame 15 allows the existing OBD connector provided for any vehicle to be firmly accommodated in the connector chamber 13 without backlash.

Furthermore, since the connector accommodation adapter frame 15 is fitted into a concave portion 13A (see Figure 2(c)) formed on the bottom surface in the connector chamber 13 and thereby positioned and fixed, thus preventing backlash in the connector accommodation adapter frame 15 itself in the connector chamber 13.

Referring to Figure 1 and Figures 2(a), (b) and (c), the lock chamber 14 is provided in front of the connector chamber 13, that is, on the forefront of the front body case 3. The top surface of this lock chamber 14 is open as an opening 16 that allows the key plate 9 in Figure 5 to be inserted into the lock chamber 14 and further the front of this lock chamber 14 is open as an opening 17 that allows the lock pin 11 side of the key cylinder 5 in Figure 4 (rear surface 5B side of the key cylinder 5) to face the interior of the lock chamber 14.

Furthermore, in the lock chamber 14, a pair of plate engagement grooves 8 are formed as grooves with which both sides of the key plate 9 inserted in the lock chamber 14 engage. In the OBD connector protective cover 1 in Figure 1 in particular, the plate engagement grooves 8 are formed along a direction crossing the slide direction of the slide cover 4 (substantially orthogonal direction in the example in Figure 1 and Figure 2) in order to keep the slide cover 4 in a non-slidable state with the key plate 9 simultaneously engaging with the plate engagement grooves 8 and the plate insertion hole 7 of the slide cover 4.

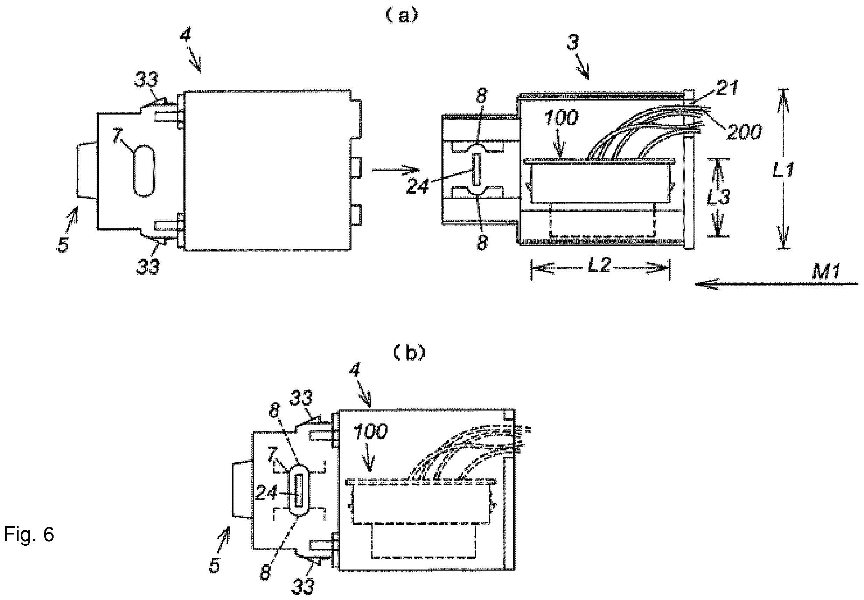

Although the mode of arrangement of the OBD connector 100 in the body case 3 (more specifically, inside of the connector chamber 13) is not shown in the drawings, for example, there can be a mode in which the OBD connector 100 is accommodated along the width L1 (see Figure 6(a)) direction of the body case 3 (hereinafter, referred to as "landscape accommodation") and a mode in which the OBD connector 100 is accommodated along a direction M1 substantially orthogonal to the width L1 direction of the body case 3 (hereinafter, referred to as " portrait accommodation") as shown in Figure 6(a).

When a width L2 of the existing OBD connector 100 is compared to a depth L3 as shown in Figure 6(a), the width L2 is apparently longer. For this reason, in the case of the aforementioned landscape accommodation, the width L1 of the body case 3 needs to be increased in accordance with the width L2 of the OBD connector 100, which prevents the OBD connector protective cover 1 from being placed in a narrow space, thus limiting the types of vehicle in which the OBD connector protective cover 1 can be installed.

On the other hand, in the case of the aforementioned portrait accommodation, the width L1 of the body case 3 can be decreased in accordance with the depth L3 of the OBD connector 100, and it is thereby possible to downsize the OBD connector protective cover 1 in the width direction compared to the landscape accommodation and increase the number of types of vehicle in which the OBD connector protective cover 1 can be installed.

Referring to Figure 1 and Figures 2(a), (d1) and (d2), a plurality of (two in the example of Figure 2) slide guide rails 19 are provided on the left and right outside surfaces of the body case 3 as guide means for slidably guiding the slide cover 4.

Furthermore, referring to Figure 1 and Figures 2(a), (b) and (c), slide guide grooves 20 are provided on both sides of the outside bottom surface of the body case 3 as similar guide means.

Furthermore, referring to Figure 1 and Figures 2(a) and (e), a notch 21 is formed in the rear surface of the body case 3 as means for allowing an electric wire 200 connecting a vehicle-mounted computer and the OBD connector 100 to pass therethrough into the body case 3.

Two holes 22 formed in the rear surface of the body case 3 in Figures 2(a) and (e) are provided in correspondence with two protrusions 23 (see Figures 3(a), (c) and (f)) that protrude from a rear edge of the slide cover 4, and configured so that the two protrusions 23 are fitted into the two holes 22 when the opening of the body case 3 (the opening 2 in the top surface of the connector chamber 13 and the opening 16 in the top surface of the lock chamber 14) is closed with the slide cover 4 as shown in Figure 6(b).

Such a configuration not only reduces deflection or backlash of the slide cover 4 but also makes it difficult to perform an illegal operation from the rear edge of the slide cover 4 such as inserting a sharp protrusion such as a flathead screwdriver into a tiny gap between the rear edge of the slide cover 4 and the body case 3, prying open the slide cover 4 and then illegally accessing the OBD connector 100 inside the body case 3, thus provides a high abuse prevention effect for the OBD connector 100.

A through hole 24 formed in the bottom surface of the body case 3, more specifically, in the bottom surface of the lock chamber 14 in Figure 1 and Figures 2(a) and (c) is formed for an authorized user of the OBD connector 100 (e.g., vehicle mechanic) as means for facilitating an operation of removing the key plate 9 from a plate insertion hole 7, and a convex portion 25 formed on the end face of the key plate 9 is fitted into this through hole 24.

### << Detailed configuration of slide cover 4 >>

Referring to Figure 1 and Figure 3(a), the slide cover 4 is provided with a top plate 26, left and right side plates 27 and a front plate 28, forming a box-shaped appearance as a whole.

The side plate 27 of the slide cover 4 is provided with a plurality of (two in the example in Figure 1 and Figure 3) slide guide grooves 29 in the inside surface thereof and configured so that the slide guide grooves 29 and the above-described slide guide rails 19 of the body case 3 slidably engage with each other.

The bottom edge of the side plate 27 of this slide cover 4 has an inwardly folded cross-sectional shape and the folded distal end portion is configured so as to slidably engage with the slide guide groove 20 in the outside bottom surface of the body case 3 as the slide guide rail 30.

In such a configuration, since the bottom edge of the side plate 27 of the slide cover 4 is hidden in the slide groove 20 in the outside bottom surface of the body case 3 without being exposed on the surface, the configuration makes it impossible to perform an illegal operation from the side plate bottom edge of the slide cover 4 such as inserting a sharp protrusion such as a flathead screwdriver into a tiny gap between the bottom edge of the side plate 27 and the body case 3, prying open the slide cover 4 and then illegally accessing the OBD connector 100 inside the body case 3, thus provides a high abuse prevention effect for the OBD connector 100.

As described above, since the respective slide guide grooves 20 and 29 and their corresponding slide guide rails 19 and 30 slidably engage with each other, the slide cover 4 is slidably attached to the body case 3 and sliding of the slide cover 4 allows the opening of the body case 3 (the opening 2 in the top surface of the connector chamber 13 and the opening 16 in the top surface of the lock chamber 14) to be opened/closed.

The top plate 26 of the slide cover 4 is configured in size and shape corresponding to the opening of the body case 3 (the opening 2 in the top surface of the connector chamber 13 and the opening 16 in the top surface of the lock chamber 14) and the top plate 26 of the slide cover 4 is placed over the opening of the body case 3, and in this way, the opening of the body case 3 is configured to be securely closed with the top plate 26.

Referring to Figure 1 and Figures 3(a), (c) and (f), the plate insertion hole 7 is provided in the top plate 26 of the slide cover 4 as a hole that allows the key plate 9 to be inserted into the plate engagement groove 8 on the body case 3 side.

As shown in Figure 6(b), with the opening of the body case 3 (the opening 2 in the top surface of the connector chamber 13 and the opening 16 in the top surface of the lock chamber 14) being closed with the slide cover 4, when the key plate 9 is inserted from the plate insertion hole 7 into the plate engagement groove 8 of the body case 3 and the inserted key plate 9 engages with the plate insertion hole 7 and the plate engagement groove 8, the key plate 9 thereby functions as a slide stopper of the slide cover 4 and the key plate 9 causes the slide cover 4 to be set in a non-slidable state. Note that this non-slidable state is released by removing the key plate 9 from the plate insertion hole 7.

Referring to Figures 3(a) and (b), a mounting hole 32 for mounting the key cylinder 5 in Figure 4 is formed in the front plate 28 of the slide cover 4. The rear surface 5B side (side on which the lock pin 11 comes out or goes in) of the key cylinder 5 is inserted into this mounting hole 32, the rear surface 5B side of the key cylinder 5 is attached and fixed to the front plate 28 of the slide cover 4 using a retaining ring (or an adhesive depending on the situation) such as a snap ring (not shown), and in this way, the key cylinder 5 is integrated with the slide cover 4, and this makes it impossible to remove the key cylinder 5 as a single unit.

As shown in Figure 1, among the existing OBD connectors 100, there is a type with relatively large lugs 103 provided on both sides of the fitting 102 of the OBD connector 100 so as to be attached to the vehicle using the lugs 103 or another type to be attached to the vehicle using the joint 104 provided in the OBD connector 100. In order to be adaptable to these types, as shown in Figure 1 and Figures 3(a) and (c), the OBD connector protective cover 1 of the present embodiment lugs 33 are provided on the side plate 27 of the slide cover 4 that are functionally equivalent to the lugs and a joint 34 is provided on the top plate 26 of the slide cover 4 with that is functionally equivalent to the joint 104.

Furthermore, among the existing OBD connectors 100, there is a type with lugs (not shown) provided on the top and under surfaces (see A in Figure 1) of the fitting 102 of the OBD connector 100 so as to prevent backlash of the OBD connector 100 using an elastic restoring force of the lugs, thus stabilizing the mounting condition of the OBD connector 100. In order to be also adaptable to this type, in the OBD connector protective cover 1 of the present embodiment, a tapered protrusion 35 inclined in a predetermined direction is provided on the top plate 26 of the slide cover 4 as shown in in Figure 1 and Figures 3(a), (c) and (d) so as to prevent backlash of the OBD connector protective cover 1 using a wedging operation of the tapered part of the protrusion 35, making it possible to obtain a stable mounting condition of the OBD connector protective cover 1.

### << Method of using OBD connector protective cover or the like >>

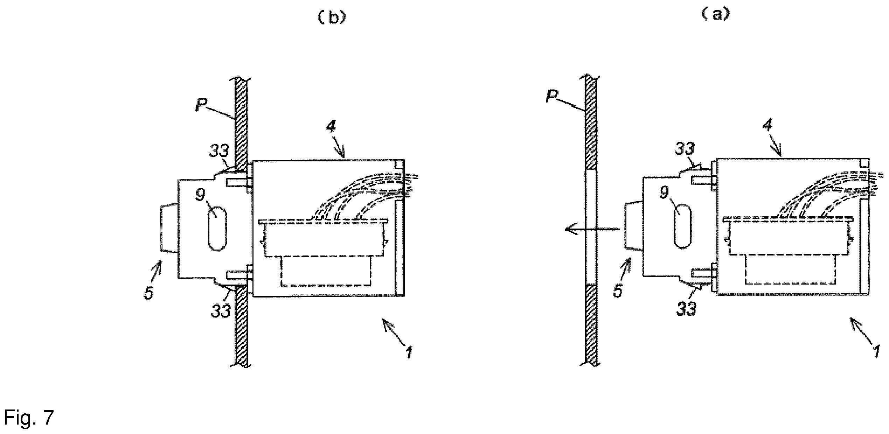

Figures 6(a) and (b), and Figures 7(a) and (b) are diagrams illustrating the method of using the OBD connector protective cover in Figure 1.

The OBD connector protective cover 1 in Figure 1 can be divided into four components: body case 3, slide cover 4, key plate 9 and connector accommodation adapter frame 15 (or three components when the connector accommodation adapter frame 15 is not used) as shown in Figure 1.

In the OBD connector protective cover 1 in Figure 1, regarding the operation of accommodating the OBD connector 100 in the body case 3, for example, with the OBD connector protective cover 1 divided into pieces as shown in Figure 1, the connection terminal portion 101 of the OBD connector 100 is fitted into the connector accommodation adapter frame 15, the OBD connector 100 together with the connector accommodation adapter frame 15 is inserted from the opening of the body case 3 (opening 2 in the top surface of the connector chamber 13) into the connector chamber 13, and the entire OBD connector 100 is accommodated in the connector chamber 13 as shown in Figure 6(a). At this time, the electric wire 200 connected to the accommodated OBD connector 100 is made to come out through the notch 21 in the rear surface of the body case 3.

Note that in the accommodation operation, the entire slide cover 4 need not always be removed from the body case 3 as shown in Figure 1 and Figure 6(a), but it is alright if the opening 2 in the top surface of the connector chamber 13 is at least substantially fully opened by sliding of the slide cover 4. At this time, even when the opening 16 in the top surface of the lock chamber 14 is closed with the slide cover 4, this will not interfere with the accommodation operation.

When the accommodation operation of the OBD connector 100 is completed as described above, next, the slide cover 4 is made to slide from the front to back side of the body case 3 so that the opening of the body case 3 (the opening 2 in the top surface of the connector chamber 13 and the opening 16 in the top surface of the lock chamber 14) is closed with the slide cover 4 as shown in Figure 6(b).

Then, the key plate 9 is inserted from the plate insertion hole 7 of the slide cover 4 into the plate engagement groove 8 of the body case 3 (see Figure 7(a)) to set the slide cover 4 in a non-slidable state.

As described above, in the stage in which the slide cover 4 is set in a non-slidable state, the key plate 9 can be removed from the plate insertion hole 7 and locking of the slide cover 4 is not completed yet.

To complete the locking of the slide cover 4, a predetermined key operation is performed such as inserting the key into the key hole 12 of the key cylinder 5 and turning the key. The lock pin 11 then pops out from the rear surface 5a of the key cylinder 5 and is inserted into the lock hole 10 of the key plate 9 so that the key plate 9 cannot be removed from the plate insertion hole 7, and the locking of the slide cover 4 is thereby completed. The slide cover 4 is not allowed to slide in any direction unless the key plate 9 is removed.

The operation of accommodating the OBD connector 100 in the body case 3 of the OBD connector protective cover 1 in Figure 1 is completed in this way. The reverse of the procedure for the aforementioned accommodation operation may be performed to remove the OBD connector 100 from inside the body case 3.

The OBD connector 100 accommodated in the body case 3 of the OBD connector protective cover 1 as described above can be replaced in the original position before the accommodation, for example, by attaching it to a connector mounting plate P of the vehicle using the lugs 33 of the slide cover 4 as shown in Figures 7(a) and (b) or attaching it to the vehicle using the joint 34 of the slide cover 4.

As a specific configuration of the above-described OBD connector protective cover 1 in Figure 1, the key cylinder 5 is placed on the forefront of the slide cover 4 in a visually observable manner. Thus, everybody can clearly recognize the presence of the key cylinder 5 at a glance, having strong appeal of the presence of the key cylinder 5 to the abuser of the OBD connector 100 in particular, consequently causing the abuser to give up the intention of abusing the OBD connector 100, thereby providing a high abuse prevention effect.

## Claims

1. An OBD connector protective cover (1) for protecting an OBD connector (100) provided for a vehicle, comprising:
a body case (3) that comprises an opening (2), the body case accommodating an entire OBD connector (100) through the opening(2) ;
a slide cover (4) that is slidably attached to the body case (3) and opens/closes the opening (2) by sliding thereof; and
a lock mechanism (6) that comprises a key cylinder (5) placed on a forefront of the slide cover (4) in a visually observable manner and locks the slide cover (4) through operation of the key cylinder (5),
**characterized in that**
the lock mechanism (6) further comprises:
a key plate (9) that engages with a plate insertion hole (7) of the slide cover (4) and a plate engagement groove (8) in the body case (3) to thereby set the slide cover (4) in a non-slidable state; and
a lock pin (11) that is inserted into a lock hole (10) of the key plate (9) from the key cylinder (5) through operation of the key cylinder (5) to thereby lock the slide cover (4) set in the non-slidable state.

2. The OBD connector protective cover (1) according to claim 1 that protects an OBD connector, wherein the body case (3) is structured to accommodate the OBD connector (100) along a direction orthogonal to a width direction (L2) thereof.

3. The OBD connector protective cover (1) according to claim 1 that protects an OBD connector, wherein the slide cover (4) comprises lugs (33) that are functionally equivalent to lugs (103) provided on both sides of an existing OBD connector (100) or a joint (34) that is functionally equivalent to a joint (104) provided for the existing OBD connector (100).

## Patentansprüche

1. Eine OBD-Stecker-Schutzabdeckung (1) zum Schutz eines OBD-Steckers (100), vorgesehen für ein Fahrzeug, umfassend:
ein Körpergehäuse (3), das eine Öffnung (2) umfasst, wobei das Körpergehäuse einen gesamten OBD-Stecker (100) durch die Öffnung (2) aufnimmt;
eine Schiebeabdeckung (4), die verschiebbar an dem Körpergehäuse (3) angebracht ist und die Öffnung (2) öffnet/schließt, indem sie verschoben wird; und
einen Sperrmechanismus (6), der einen auf einer Vorderseite der Schiebeabdeckung (4) optisch wahrnehmbar platzierten Schließzylinder (5) umfasst und die Schiebeabdeckung (4) durch Bedienung des Schließzylinders (5) arretiert,
**dadurch gekennzeichnet, dass**
der Sperrmechanismus (6) ferner umfasst:
eine Schließplatte (9), die in ein Platteneinführloch (7) der Schiebeabdeckung (4) und eine Platteneingreifnut (8) in dem Körpergehäuse (3) eingreift, um dadurch die Schiebeabdeckung (4) in einen nicht verschiebbaren Zustand zu versetzen; und
einen Sperrstift (11), der in ein Arretierloch (10) der Schließplatte (9) von dem Schließzylinder (5) aus durch Bedienung des Schließzylinders (5) eingeführt wird, um dadurch die in den nicht verschiebbaren Zustand versetzte Schiebeabdeckung (4) zu arretieren.

2. Die OBD-Stecker-Schutzabdeckung (1) nach Anspruch 1, die einen OBD-Stecker schützt, wobei das Körpergehäuse (3) so konstruiert ist, dass es den OBD-Stecker (100) entlang einer orthogonal zu einer Breitenrichtung (L2) davon verlaufenden Richtung aufnimmt.

3. Die OBD-Stecker-Schutzabdeckung (1) nach Anspruch 1, die einen OBD-Stecker schützt, wobei die Schiebeabdeckung (4) umfasst: Vorsprünge (33), die funktional Vorsprüngen (103) entsprechen, die auf beiden Seiten eines vorhandenen OBD-Steckers (100) vorgesehen sind, oder eine Verbindungsstelle (34), die funktional einer Verbindungsstelle (104) entspricht, die für den vorhandenen OBD-Stecker (100) vorgesehen ist.

## Revendications

1. Couvercle de protection (1) de connecteur OBD destiné à protéger un connecteur OBD (100) prévu pour un véhicule, comprenant :
un boîtier de corps (3) qui comprend une ouverture (2), le boîtier de corps logeant un connecteur OBD (100) complet à travers l'ouverture (2) ;
un couvercle coulissant (4) qui est attaché de façon coulissante au boîtier de corps (3) et ouvre/ferme l'ouverture (2) par son coulissement ; et
un mécanisme de verrouillage (6) qui comprend un cylindre de serrure (5) placé sur une face antérieure du couvercle coulissant (4) d'une façon visuellement observable et verrouille le couvercle coulissant (4) par le biais de l'actionnement du cylindre de serrure (5),
**caractérisé en ce que**
le mécanisme de verrouillage (6) comprend également :
une plaque de clé (9) qui entre en prise avec un trou d'insertion de plaque (7) du couvercle coulissant (4) et une rainure (8) de mise en prise de la plaque dans le boîtier de corps (3) pour mettre ainsi le couvercle coulissant (4) dans un état non coulissant ; et
un axe de verrouillage (11) qui est inséré dans un trou de verrouillage (10) de la plaque de clé (9) à partir du cylindre de serrure (5) par le biais de l'actionnement du cylindre de serrure (5) pour verrouiller ainsi le couvercle coulissant (4) mis dans l'état non coulissant.

2. Couvercle de protection (1) de connecteur OBD selon la revendication 1 qui protège un connecteur OBD, dans lequel le boîtier de corps (3) est structuré pour loger le connecteur OBD (100) le long d'une direction orthogonale à sa direction en largeur (L2).

3. Couvercle de protection (1) de connecteur OBD selon la revendication 1 qui protège un connecteur OBD, dans lequel le couvercle coulissant (4) comprend des pattes (33) qui sont fonctionnellement équivalentes à des pattes (103) disposées des deux côtés d'un connecteur OBD (100) existant ou une jonction (34) qui est fonctionnellement équivalente à une jonction (104) prévue pour le connecteur OBD (100) existant.
